Europäisches Patentamt

**European Patent Office**

**Office européen des brevets**

(19)

(11) Veröffentlichungsnummer: **0 392 071**

**A1**

(12)

# EUROPÄISCHE PATENTANMELDUNG

(21) Anmeldenummer: **89111938.0**

(22) Anmeldetag: **30.06.89**

(51) Int. Cl.5: **B60T 8/18, B60G 17/00**

(30) Priorität: **08.04.89 DE 3911601**

(43) Veröffentlichungstag der Anmeldung:
**17.10.90 Patentblatt 90/42**

(84) Benannte Vertragsstaaten:
**DE FR GB IT SE**

(71) Anmelder: **VDO Adolf Schindling AG**
**Gräfstrasse 103**
**D-6000 Frankfurt/Main 90(DE)**

(72) Erfinder: **Weibler, Wolfgang, Dr.**

Herzogenriedstrasse 46
**D-6800 Mannheim 1(DE)**
Erfinder: **Stiller, Rudolf**
**Siedlerstrasse 1**
**D-6369 Niederdorfelden(DE)**
Erfinder: **Porth, Wolfgang**
**Röhrborngasse 70**
**D-6000 Frankfurt/Main 60(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Lastsensor für ein Kraftfahrzeug.**

(57) Bei einem Lastsensor für ein Kraftfahrzeug, wobei eine ringförmige Flüssigkeitskammer (5) mit einem Drucksensor (15) in Verbindung steht, ist ein Ringkolben (3) von der Last beaufschlagt und wirkt auf die Flüssigkeitskammer (5).

Fig. 1

EP 0 392 071 A1

## Lastsensor für ein Kraftfahrzeug

Die Erfindung betrifft einen Lastsensor für ein Kraftfahrzeug, wobei eine ringförmige Flüssigkeitskammer mit einem Drucksensor in Verbindung steht und mindestens teilweise breiter als ein Ringkolben ist.

Bei einer bekannten Lageregelung eines Kraftfahrzeugs werden in Abhängigkeit von den jeweils auf das Fahrzeug wirkenden Kräfte die Federung sowie die Dämpfung gesteuert. Dabei ist eine Messung der Last, nämlich derjenigen Kräfte, welche vom Fahrzeug auf die einzelnen Räder übertragen werden, erforderlich.

Es ist bereits aus DE 32 24 295 A1 ein Steuerdruckgeber bekannt für einen lastabhängig arbeitenden hydraulisch gesteuerten Bremskraftregler. Dieser Steuerdruckgeber umfaßt eine ringförmige Flüssigkeitskammer mit einer flexiblen Membran. Die dabei zu messende Last verformt eine Tellerfeder derart, daß bei größer werdender Last ein Ringkolben die Membran derart verformt, daß der Flüssigkeitsdruck zunimmt, was zur Steuerung des Bremskraftreglers benutzt wird. Dabei wird über die Federkonstante der Tellerfeder die Last zunächst in einen Weg des Ringkolbens umgewandelt, der wiederum eine Druckänderung unter Mitwirkung der Membran ergibt. Neben anderen Einflüssen gehen bei dem bekannten Steuerdruckgeber dementsprechend die Federkonstante sowie die Elastizität der Membran in die Meßgenauigkeit ein.

Aufgabe der vorliegenden Erfindung ist es, einen Lastsensor anzugeben, der eine genügende Genauigkeit aufweist, zuverlässig arbeitet und kostengünstig herstellbar ist. Ferner ist insbesondere am Kopfteil eines Federbeins eine geringe Bauhöhe erforderlich.

Der erfindungsgemäße Lastsensor ist dadurch gekennzeichnet, daß ein Ringkolben von der Last beaufschlagt ist und auf die Flüssigkeitskammer wirkt. Vorzugsweise ist dabei vorgesehen, daß die ringförmige Flüssigkeitskammer mit einem Ringspalt versehen ist, dessen Breite an die Breite des Ringkolbens angepaßt ist und in den der Ringkolben eindringt.

Der erfindungsgemäße Lastsensor zeichnet sich durch äußerste Zuverlässigkeit selbst bei den rauhen Bedingungen des Kraftfahrzeugbetriebs aus. Außerdem enthält der erfindungsgemäße Lastsensor außer einem Drucksensor und der dazugehörigen elektrischen Schaltung keine weiteren Bauelemente, welche durch Exemplarsteuerung oder Alterung die Meßgenauigkeit beinflussen könnten. Es ist daher einerseits ein lediglich geringer Abgleichaufwand bei der Herstellung erforderlich. Andererseits ist die Meßgenauigkeit langfristig konstant.

Eine Weiterbildung der Erfindung besteht darin, daß die ringförmige Flüssigkeitskammer einen sich in Richtung auf den Ringkolben aufweitenden Querschnitt aufweist und daß der Ringspalt und die an den Ringspalt angrenzenden Wände der Flüssigkeitskammer von einer Membran abgedeckt sind.

Durch die Membran wird eine zuverlässige Abdichtung zwischen dem Ringkolben und dem Ringspalt erzielt, wobei die Eigenschaften der Membran jedoch nicht in die Meßgenauigkeit eingehen.

Eine geringe Bauhöhe wird gemäß einer anderen Weiterbildung dadurch erzielt, daß die ringförmige Flüssigkeitskammer in einem ringförmigen Bauteil angeordnet ist, dessen Innendurchmesser größer als der Außendurchmesser eines Kopfteils eines Federbeins ist.

Eine vorteilhafte Ausgestaltung des erfindungsgemäßen Lastsensors ist dadurch gegeben, daß das ringförmige Bauteil mit einem Flansch zur Befestigung an einem Karosserieteil versehen ist.

Gemäß einer anderen Weiterbildung der Erfindung ist vorgesehen, daß der Drucksensor und eine zugehörige elektrische Schaltung in dem ringförmigen Bauteil angeordnet sind. Dadurch werden kurze und geschützt verlegte Leitungen zwischen dem Drucksensor und der elektrischen Schaltung ermöglicht. Außerdem kann der Drucksensor bereits bei der Herstellung der elektrischen Schaltung mit dieser verbunden werden und beides als eine Baugruppe in das ringförmige Bauteil eingesetzt werden. Da der übrige Lastsensor keine abzugleichenden Bauteile enthält, kann ferner das aus dem Drucksensor und der elektrischen Schaltung bestehende Bauteil für sich abgeglichen und somit ohne weiteren Abgleich in beliebige Exemplare des Lastsensors eingesetzt werden.

Eine andere Weiterbildung der Erfindung ermöglicht eine vorteilhafte Verbindung mit dem Kopfteil des Federbeins und ist dadurch gekennzeichnet, daß das ringförmige Bauteil mit in axialer Richtung wirksamen Führungselementen versehen ist, in welchen ein den Ringkolben tragender Ring axial verschiebbar gelagert ist, und daß das Kopfteil des Federbeins eine elastisch gelagerte Hülse aufweist, welche von einem Kugellager umschlossen ist, das von dem Ring umgeben ist.

Die Erfindung läßt zahlreiche Ausführungsformen zu. Zwei davon sind schematisch in der Zeichnung anhand mehrerer Figuren dargestellt und nachfolgend beschrieben. Es zeigt:

Fig. 1 einen Längsschnitt durch ein Ausführungsbeispiel und das Kopfteil eines Federbeins und

Fig. 2 ebenfalls als Längsschnitt einen Teil eines zweiten Ausführungsbeispiels. Gleiche Teile sind in den Figuren mit gleichen Bezugszeichen versehen.

Das ringförmige Bauteil 1 ist mit einem Flansch 2 versehen, der mit Schrauben an einem lediglich teilweise dargestellten Karosserieteil 3 befestigt ist. Der Übersichtlichkeit halber ist lediglich eine Schraube 4 dargestellt. Eine ringförmige Flüssigkeitskammer 5 im Bauteil 1 ist an sich nach unten offen und besteht aus einem oberen schmäleren Teil, an den ein sich nach unten erweiternder Teil anschließt. Nach unten wird die ringförmige Flüssigkeitskammer 5 durch einen Ring 6 und durch den nach außen abgewinkelten Teil einer Hülse 7 begrenzt. In den zwischen diesen beiden Teilen 6, 7 gebildeten Ringspalt dringt ein Ringkolben 8 ein. Zur Abdichtung des Ringspaltes gegenüber dem Ringkolben ist eine Membran 9 vorgesehen.

Der Ringkolben ist auf einem Ring 10 angeordnet, der an seinem Umfang mit geeigneten Führungsnuten 11 versehen ist, die eine vertikale Führung im Ring ermöglichen. Um ein Herausfallen des Ringes 10 aus dem Ring zu verhindern, ist der Ring 6 an seinem unteren Rand nach innen gebogen.

Im Ring 10 befindet sich ein Kugellager 12, das in an sich bekannter Weise die beim Durchfedern entstehende Drehbewegung des Kopfteils 13 des Federbeins zuläßt.

Die Flüssigkeitskammer 5 ist über eine Bohrung 14 mit einem Drucksensor 15 verbunden, dessen Anschlußleitungen 16 mechanisch und elektrisch unmittelbar mit einer elektrischen Schaltung 17 in Verbindung stehen. Der Übersichtlichkeit halber ist die elektrische Schaltung 17 lediglich als Leiterplatte dargestellt. Sie kann beispielsweise in Dickschichttechnik hergestellt sein. Die für die Schaltung 17 vorgesehene Ausnehmung 18 in dem ringförmigen Bauteil 1 ist mit einem Deckel 19 verschlossen, der um einen entsprechenden Vorsprung am ringförmigen Bauteil 1 umgebördelt ist. Zur Erhöhung der Dichtwirkung ist in einer umlaufenden Nut eine Dichtung 20 vorgesehen.

Durch das hydraulische System, das von dem Ringkolben, der Flüssigkeitskammer 5, der Bohrung 14 und dem Drucksensor 15 gebildet wird, wird die Kraft, welche von dem Ringkolben ausgeht, entsprechend der Fläche des Ringkolbens in einen Druck umgewandelt, der in einem günstigen Arbeitsbereich verfügbarer Drucksensoren liegt. Da die Flüssigkeit nicht komprimierbar ist und der Drucksensor einen vernachlässigbar kleinen Meßweg aufweist, ist der Weg des Ringkolbens äußerst klein, so daß praktisch keine Verformung der Membran 9 auftritt. Das Befüllen der Flüssigkeitskammer 5 erfolgt unter Vakuum, anschließend wird die Einfüllöffnung 21 mit einer Stahlkugel 22 verschlossen.

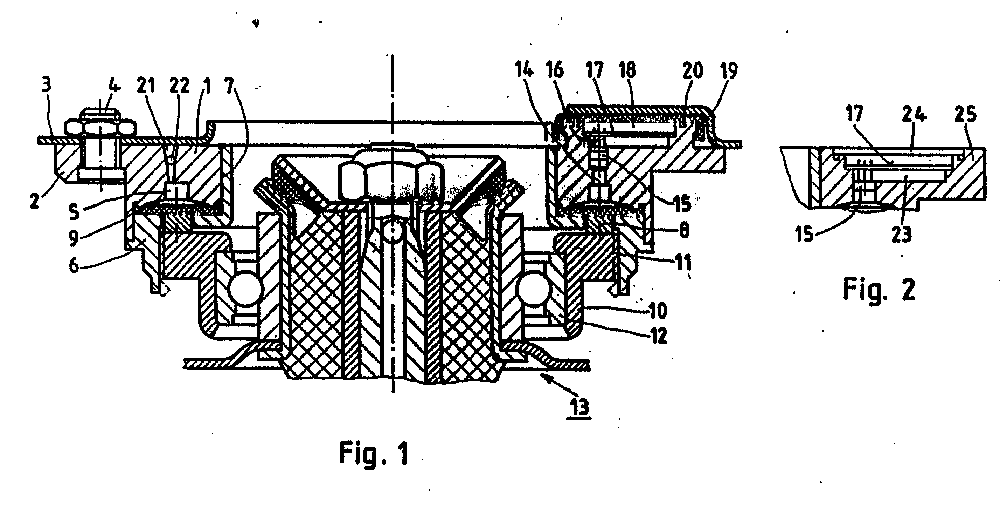

Bei dem in Fig. 2 dargestellten Ausführungsbeispiel ist zur Abdeckung der Ausnehmung 23 ein Deckel 24 vorgesehen, der in das ringförmige Bauteil 25 eingelassen ist. Die Montage des Drucksensors kann zum Beispiel mit einer Metall-Glasdurchführung - ähnlich einem Transistorsockel -erfolgen, auf die der Drucksensor als Chip aufgeklebt wird und die Kontakte gebondet werden und die dann anschließend in die Bohrung 15 eingelötet wird. Die Schaltung wird also nicht mit Druck beaufschlagt. Bei der Verwendung eines Absolutdrucksensors wären jedoch auch Konstruktionen denkbar, bei welchen der Chip direkt auf der Schaltung 17 sitzt und die Ausnehmung 18 mit Öl gefüllt ist.

## Ansprüche

1. Lastsensor für ein Kraftfahrzeug, wobei eine ringförmige Flüssigkeitskammer mit einem Drucksensor in Verbindung steht, dadurch gekennzeichnet, daß ein Ringkolben von der Last beaufschlagt ist und auf die Flüssigkeitskammer wirkt.

2. Lastsensor nach Anspruch 1, dadurch gekennzeichnet, daß die ringförmige Flüssigkeitskammer (5) mit einem Ringspalt versehen ist, dessen Breite an die Breite des Ringkolbens angepaßt ist und in den der Ringkolben (8) eindringt.

3. Lastsensor nach Anspruch 2, dadurch gekennzeichnet, daß die ringförmige Flüssigkeitskammer (5) einen sich in Richtung auf den Ringkolben (8) aufweitenden Querschnitt aufweist und daß die Flüssigkeitskammer (5) von einer Membran (9) abgedichtet ist.

4. Lastsensor nach einem der vorhergehenden Ansprüche, dadurch gekennzeichnet, daß die ringförmige Flüssigkeitskammer (5) in einem ringförmigen Bauteil (1) angeordnet ist, dessen Innendurchmesser größer als der Außendurchmesser eines Kopfteils (13) eines Federbeins ist.

5. Lastsensor nach Anspruch 4, dadurch gekennzeichnet, daß das ringförmige Bauteil (1) mit einem Flansch (2) zur Befestigung an einem Karosserieteil (3) versehen ist.

6. Lastsensor nach Anspruch 4, dadurch gekennzeichnet, daß der Drucksensor (15) und eine zugehörige elektrische Schaltung (17) in dem ringförmigen Bauteil (1) angeordnet sind.

7. Lastsensor nach einem der vorhergehenden Ansprüche, dadurch gekennzeichnet, daß das ringförmige Bauteil (1) mit in axialer Richtung wirksamen Führungselementen (6, 11) versehen ist, in welchen ein den Ringkolben (8) tragender Ring (10) axial verschiebbar gelagert ist, und daß das Kopfteil (13) des Federbeins eine elastisch gelagerte Hülse aufweist, welche von einem Kugellager (12) umschlossen ist, das von dem Ring (10) um-

geben ist.

Fig. 1

Fig. 2

EP 0 392 071 A1

Europäisches Patentamt

**EUROPÄISCHER RECHERCHENBERICHT**

Nummer der Anmeldung

EP 89 11 1938

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 283 328 (BENDIX FRANCE) * Spalte 2, Zeilen 40-50; Figuren 1,2 * | 1,2,4 | B 60 T 8/18 B 60 G 17/00 |
| A | | 7 | |
| A | DE-A-3 702 732 (TEVES GMBH) * Zusammenfassung; Figur 1 * | 3 | |

| | RECHERCHIERTE SACHGEBIETE (Int. Cl.5) |
|---|---|
| | B 60 T B 60 G |

Der vorliegende Recherchenbericht wurde für alle Patentansprüche erstellt

| Recherchenort | Abschlußdatum der Recherche | Prüfer |
|---|---|---|
| BERLIN | 06-06-1990 | BLURTON M D |